# EUROPÄISCHE PATENTANMELDUNG

(11) **EP 2 256 887 A2**
(43) Veröffentlichungstag der Anmeldung: **01.12.2010**
(21) Anmeldenummer: 10005227.3
(22) Anmeldetag: 19.05.2010
(51) Int. Cl.: H02G 3/04

(54) **Geschlossener Kabelkanal**

(30) Priorität: 25.05.2009 DE 202009007419 U
(71) Anmelder: WEMEFA Horst Christopeit GmbH, 42555 Velbert (DE)
(72) Erfinder: Rose, Dietmar, 45663 Recklinghausen (DE)
(74) Vertreter: Patentanwälte Buse, Mentzel, Ludewig

(57) **Zusammenfassung**

Die Erfindung betrifft einen geschlossenen Kabelkanal (100) zur Aufnahme und Halterung von Leitungen oder Kabeln, die Solarmodule bzw. Photovoltaikmodule mit Anschlüssen verbinden. Der Kabelkanal (100) wird durch die Seitenwand (22, 22') einer die Module tragenden Tragschiene (20, 20') und durch eine Profilleiste (90, 90') gebildet, wobei die Profilleiste (90, 90') einerseits mit einem Ende schwenkbar an der Tragschiene (20, 20') gelagert sowie andererseits mit dem anderen Ende der Profilleiste (90, 90') an der Tragschiene (20, 20') festlegbar ist (Fig. 1).

## Beschreibung

Die Erfindung betrifft einen geschlossenen Kabelkanal zur Aufnahme und Halterung von Leitungen oder Kabeln, welche Solarmodule bzw. Photovoltaikmodule mit entsprechenden Anschlüssen verbinden.

Solarmodule bzw. Photovoltaikmodule wandeln das Sonnenlicht in elektrische Energie um und werden einzeln oder zu Gruppen verschaltet in Solaranlagen bzw. Photovoltaikanlagen zur Stromversorgung verwendet. Die in den Solarmodulen gewonnene elektrische Energie wird über Kabel, einem Energiespeicher bzw. einem Energieverbraucher zugeführt oder aber in das öffentliche Stromnetz eingespeist. Es sind verschiedene Konstruktionen von Solaranlagen bekannt, beispielsweise die Anordnung von Solarmodulen auf Schrägdächern, auf Flachdächern oder freistehende Konstruktionen. Alle diese verschiedenen Solaranlagen sind den Witterungseinflüssen ausgesetzt. Die elektrischen Leitungen sind durch eine Isolation geschützt, jedoch beispielsweise nicht gegen mechanische Beschädigung, ausgelöst durch herabfallende Gegenstände bei ungünstigen Wetter, wie Wind und/oder Schnee.

Aus dem Gebrauchsmuster DE 29616947 U1 ist eine Tragschiene für Solarmodule bekannt, bei der ein nach oben offener Kanal zur Kabelführung an der Tragschiene angeformt ist. Nachteilig ist, dass nur an einer Seite der Tragschiene Kabel verlegt werden können. Einen solchen angeformten Kabelkanal zeigt auch das Gebrauchsmuster DE 202005003224 U1. Des Weiteren ist in diesem Gebrauchsmuster die Möglichkeit aufgezeigt, mit einem Ergänzungsprofil an einer Tragschiene einen Kabelkanal sowohl auf der rechten als auch auf der linken Seite der Tragschiene zu schaffen. Hierzu wird das Ergänzungsprofil mit einem Ende in eine hinterschnittene Nut der Tragschiene eingeschoben und dort verklemmt. Nachteilig bei beiden vorgenannten Kabelkanälen ist, dass diese nach oben offen sind und damit die Kabel oder Leitungen den Witterungseinflüssen, insbesondere mechanischen Beschädigungen, ausgesetzt sind.

Aufgabe der vorliegenden Erfindung ist es, eine einfache Anordnung für einen geschlossenen Kabelkanal zum Führen von Kabeln und elektrischen Leitungen an einer Tragschiene zu schaffen.

Diese Aufgabe wird mit einem geschlossenen Kabelkanal mit den Merkmalen des Anspruchs 1 gelöst. Wie beim Stand der Technik wird eine ergänzende Profilleiste zur Bildung des Kabelkanals verwendet. Diese Profilleiste wird an der Tragschiene angeordnet, welche zum Halten der Module, nämlich der Solarmodule bzw. Photovoltaikmodule vorgesehen ist. Anders als im Stand der Technik werden jedoch beide Enden der Profilleiste mit der Tragschiene verbunden. Hierzu ist es vorteilhaft, die Profilleiste im Wesentlichen C-förmig auszubilden, um innerhalb dieser C-Form einen Kabelkanal zu schaffen. Andere Profilformen sind jedoch möglich. Ein Ende der Profilleiste, insbesondere das untere Ende der Profilleiste, wird schwenkbar mit der Tragschiene verbunden. Hierzu wird vorzugsweise eine drehgelenkige Verbindung vorgesehen, wobei an der Tragschiene eine gelenkpfannenartige Aufnahme angeordnet ist und die Profilleiste endseitig zu einem Gelenkkopf geformt ist. Das andere Ende der Profilleiste, insbesondere das obere Ende der Profilleiste, wird mit der Tragschiene verbunden, vorzugsweise über eine Klemmverbindung. Hierzu weist die Tragschiene eine Klemmleiste auf und die Profilleiste ist endseitig zu einer Hakenleiste geformt, die mit ihrem Haken zur Bildung der Klemmverbindung hinter die Klemmleiste der Tragschiene greifen kann. Auf diese Weise ist die Profilleiste so an der Tragschiene angeordnet, dass sie zwischen einer Öffnungsposition, wo der Kabelkanal zugänglich ist und einer Befestigungsposition, wo der Kabelkanal geschlossen ist, verschwenkbar ist. Durch das Vorsehen der drehgelenkigen Verbindung am unteren Ende der Profilleiste ist sichergestellt, dass beim Öffnen des Kabelkanals die im Kabelkanal verlegten Kabel nicht herausfallen, sondern von der Profilleiste gehalten werden.

Bei einer vorteilhaften Ausführungsform der Erfindung ist sowohl die drehgelenkige Verbindung als auch die Klemmverbindung der Profilleiste mit der Tragschiene lösbar, so dass nur an den Tragschienen Kabelkanäle angeordnet sind, wo diese zur Führung von Kabeln notwendig sind. Die Tragschiene wird bei einer vorteilhaften Ausführungsform spiegelsymmetrisch zur Mittelachse ausgebildet. Auf diese Weise kann eine Profilleiste sowohl an der rechten als auch an der linken Seitenwand mit der Tragschiene verbunden und dort ein geschlossener Kabelkanal gebildet werden.

Zur lösbaren Verbindung der Profilleiste mit der Tragschiene wird das vorzugsweise untere Ende der Profilleiste mit dem Gelenkkopf in eine möglichst seitliche zugängliche Öffnung an der Tragschiene eingeschoben. Damit die Breite dieser Öffnung einerseits groß genug für den Einschub des Gelenkkopfs ist und anderseits die sichere Lagerung des Gelenkkopfs in der gelenkpfannenartigen Aufnahme sichert, wird am Gelenkkopf eine Abflachung vorgesehen. Hierdurch ergibt sich ein Gelenkkopf mit einem minimalen Durchmesser, der kleiner ist als die Breite der Öffnung der gelenkpfannenartigen Aufnahme an der Tragschiene. Befindet sich der Gelenkkopf in der gelenkpfannenartigen Aufnahme der Tragschiene, ist die Profilleiste aus dieser Montageposition verschwenkbar. Durch ein Verschwenken nach oben gelangt das obere Ende der Profilleiste mit der Hakenleiste in den Bereich, wo an Tragschiene die Klemmleiste angeformt ist, welche die Hakenleiste umgreift. Durch diese Klemmverbindung wird ein geschlossener Kabelkanal gebildet, in dem die Leitungen und Kabel besser geschützt sind als in den bekannten offenen Kabelkanälen des Standes der Technik.

Die Profilleiste ist lösbar an der Tragschiene gelagert. Es ist jedoch auch möglich, ausschließlich die Klemmverbindung zu lösen, um an die im Kabelkanal geführten Kabel zu kommen. Zum Lösen dieser Klemmverbindung kann zusätzlich im oberen Bereich der Profilleiste an der Außenseite eine Griffleiste angeformt sein. Mittels eines Werkzeugs, welches in die Griffleiste eingreift, kann die Profilleiste mit ihrer Hakenleiste aus der Klemmverbindung mit der Klemmleiste der Tragschiene gelöst werden.

Zwischen der Montageposition und der Befestigungsposition befindet sich die Profilleiste in einer Öffnungsposition, wo der geöffnete Kabelkanal zugänglich ist. In vorteilhafter Weise wird eine Öffnungsposition auch durch ein Verschwenken der Profilleiste aus der Montageposition nach unten möglich. Bei einem maximalen Ausschwenken der Profilleiste nach unten wird eine Halteposition erreicht. In dieser Halteposition wird die Profilleiste an der Tragschiene gehalten und ermöglicht es leicht Kabel einzulegen, herauszunehmen oder zu kontrollieren. Um eine Schwenkbewegung der Profilleiste über die Montageposition hinweg nach unten zu ermöglichen, ist die gelenkpfannenartige Aufnahme so gestaltet, dass der obere Abschluss der gelenkpfannenartigen Aufnahme in die Seitenwand des Tragschiene übergeht und den unteren Abschluss der gelenkpfannenartigen Aufnahme, der durch eine Abbiegung der Unterseite der Tragschiene gebildet wird, überragt. Der Übergang vom oberen Abschluss der Gelenkpfannenaufnahme in die Seitenwand ist vorzugsweise als Abschrägung oder Abwinklung ausgebildet. Bei geschlossenem Kabelkanal liegt an diesem Übergang eine in gleicher Richtung ausgerichtete Anschlagleiste der Profilleiste an. Diese Anschlagleiste geht dann unmittelbar in den Gelenkkopf über.

Die Abflachung am Gelenkkopf der Profilleiste ermöglicht das leichte Einführen der Profilleiste in gelenkpfannenartige Aufnahme. Die Abflachung muss jedoch so vorgesehen werden, dass beim geschlossenen Kabelkanal der Gelenkkopf sicher in der gelenkpfannenartigen Aufnahme an der Tragschiene gehalten wird. Dies wird zum einen dadurch möglich, dass der minimale Durchmesser des Gelenkkopfes größer ist als der halbe maximale Durchmesser. Des Weiteren wird bei einer vorteilhaften Ausführungsform die Abflachung des Gelenkkopfes so gewählt, dass bei geschlossenem Kabelkanal die Abflachung in einem Winkel zur waagerechten Unterseite der Tragschiene ausgerichtet ist, der größer ist als der Winkel, in dem die Anschlagleiste zur Unterseite bzw. der Übergang von der Seitenwand zur gelenkpfannenartigen Aufnahme zur Unterseite stehen.

Die Profilleiste und die Tragschiene sind bevorzugt als Strangpressprofil ausgebildet und bestehen aus Metall oder Kunststoff, vorzugsweise aus Aluminium.

Die Erfindung offenbart eine Möglichkeit in einfacher Weise einen geschlossenen Kabelkanal an einer Tragschiene für Solarmodule bzw. Photovoltaikmodule vorzusehen. Die Montage dieser Profilschiene ist in einfacher Weise möglich. Des Weiteren kann der Kabelkanal, wenn notwendig, geöffnet oder auch die zusätzliche Profilleiste vollständig von der Tragschiene wieder entfernt werden.

Zwei Ausführungsbeispiele der Erfindung sind in den Zeichnungen dargestellt. Es zeigen:
- Fig. 1: zeigt einen Querschnitt durch eine Tragschiene mit einer Profilleiste für einen geschlossenem Kabelkanal,
- Fig. 2: zeigt die Tragschiene von Fig. 1 mit geöffnetem Kabelkanal,
- Fig. 3: zeigt die Befestigung eines Solarmoduls an einem Dachhaken mittels der Tragschiene in Fig. 1,
- Fig. 4: zeigt einen Querschnitt durch eine Tragschiene mit einer weiteren Profilleiste für einen geschlossenem Kabelkanal.

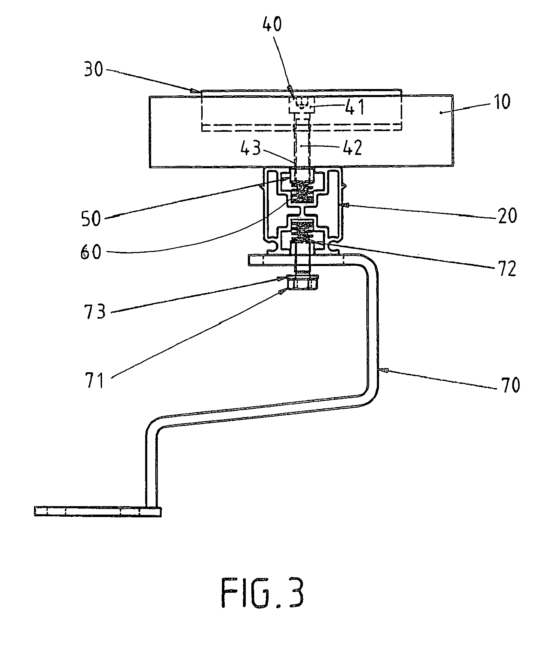

In Fig. 3 ist die Anordnung eines Solarmoduls 10 auf einem Dach gezeigt. Das Solarmodul 10 wird hierbei über ein Klemmprofil 30 mittels einer Schraube 40 an einer unter dem Modul 10 angeordneten Tragschiene 20 festgelegt. Hierzu wird die Befestigungsschraube 40 durch eine Bohrung des Klemmprofils 30 geführt und der Schraubenschaft 42 mit einem Außengewinde 43 versehen, welches mit dem Innengewinde in der mittigen Bohrung einer Schraubenmutter 50 korrespondiert. Die Schraubenmutter 50 ist an ihrer Unterseite mit einer Druckfeder 60 verbunden. Die Druckfeder 60 drückt die Schraubenmutter 50 im Befestigungsfall gegen die die Aufnahmeöffnung begrenzenden Stege der oberen Nut an der Tragschiene 20 und verhindert somit ein Verdrehen der Schraubenmutter50. Die Tragschiene 20 ist spiegelsymmetrisch aufgebaut und besitzt an ihrer Unterseite 26 ebenfalls eine hinterschnittene Nut für die Verbindung mit dem Dachhaken 70. Hierfür wird eine Sechskantschraube 71 verwendet, die sich in Befestigungslage zusammen mit der Unterlegscheibe 23 am Dachhaken 70 anlegt und mit einer Schraubenmutter 72, die in gleicher Weise wie die Schraubenmutter 50 aufgebaut ist, verbunden wird. In der Fig. 3 ist die Montagelage gezeigt. Die Schraubenmuttern 50 und 72 sind in den Nuten der Tragschiene 20 eingesetzt. Durch ein Hineindrücken der Schraubenmuttern 50, 72 in die jeweiligen Nuten entgegen der Federkraft der darunter angeordneten Druckfedern und Verdrehen der Schraubenmuttern 50, 72 wird eine Vorfixierung erreicht, durch die eine Festlegung des Moduls 10 bzw. des Dachhakens 70 erfolgt. Die an den Modulen 10 vorhandenen Kabel können nun durch Bildung eines Kabelkanals 100 sowohl an der linken als auch an der rechten Seite der Tragschiene 20 geführt werden.

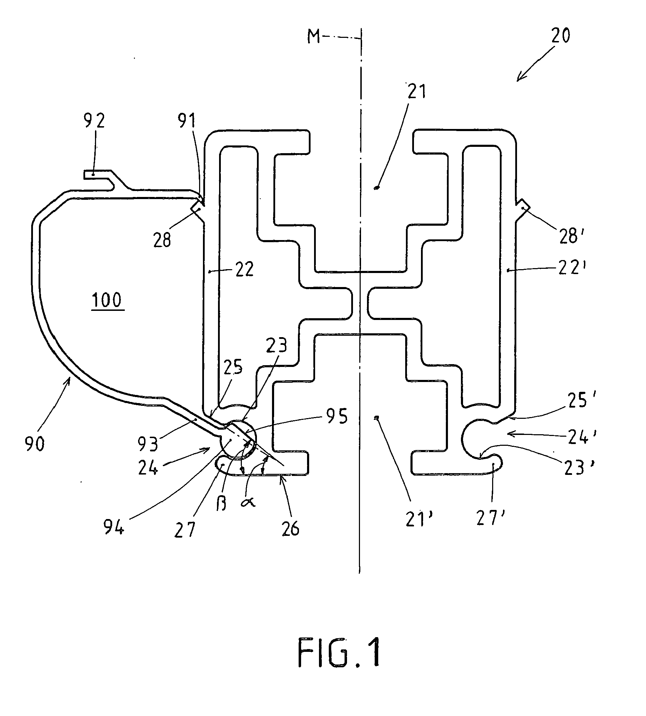

Ein geschlossener Kabelkanal 100 ergibt sich durch die Verbindung einer zusätzlichen Profilleiste 90 mit der Tragschiene 20 und ist in Fig. 1 gezeigt. Die Tragschiene 20 ist spiegelsymmetrisch zur Mittelachse M aufgebaut. Die Tragschiene 20 besitzt sowohl auf der rechten als auch auf der linken Seite eine Hakenleiste 28, 28' und eine gelenkpfannenartige Aufnahme 23, 23' mit einer seitlichen Öffnung 24, 24' sowie einer Abbiegung 23, 23' und einem Übergang 25, 25'. Nachfolgend wird auf die Anordnung der Profilleiste 90 an der linken Seitenwand 22 eingegangen. In gleicher Weise ist eine Anordnung an der rechten Seitenwand 22' möglich.

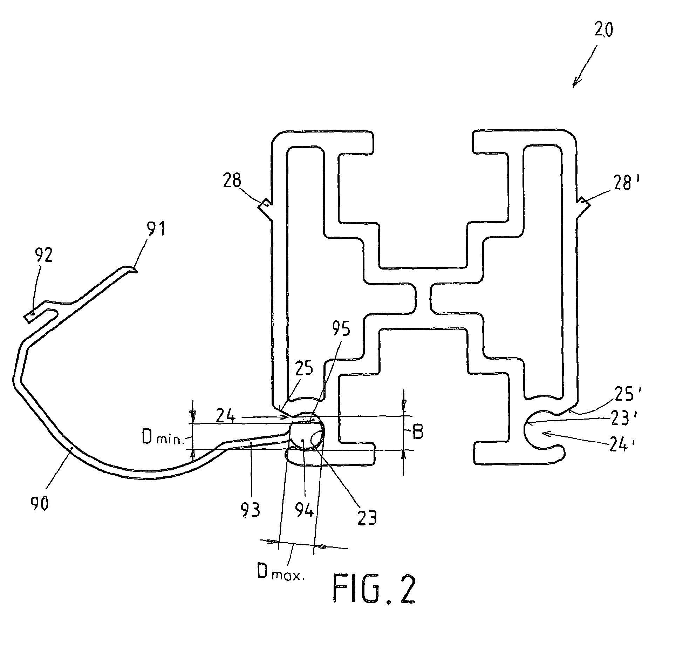

Die Montage der Profilleiste 90 erfolgt wie in Fig. 2 dargestellt, indem der am unteren Ende der Profilleiste 90 vorgesehene Gelenkkopf 94 in die gelenkpfannenartige Aufnahme 23 an der Tragschiene 20 eingeschoben wird. Die gelenkpfannenartige Aufnahme 23 besitzt eine seitliche Öffnung 24. Die Breite B der Öffnung ist kleiner als der maximale Durchmesser Dmax des Gelenkkopfs 94. Aus diesem Grund wird zum seitlichen Einschieben des Gelenkkopfs 94 in die Öffnung 24 eine Abflachung 95 am Gelenkkopf 94 vorgesehen. Im Bereich der Abflachung 95 besitzt der Gelenkkopf 94 einen minimale Durchmesser Dmin, der kleiner ist als die Breite B der Öffnung 24, so dass der Gelenkkopf 94 bei entsprechender Ausrichtung der Profilleiste 90, d.h. in der in Fig. 2 gezeigten Montageposition, in die gelenkpfannenartige Aufnahme 23 einführbar ist. Der Gelenkkopf 94 mit Abflachung 95 ist jedoch größer als eine Halbkugel, d.h. der minimale Durchmesser Dmin des Gelenkkopfes 94 ist größer als der halbe Durchmesser des maximalen Durchmessers Dmax, um eine sichere Lagerung des Gelenkkopfs 94 in der gelenkpfannenartige Aufnahme 23 zu ermöglichen.

Ein geschlossener Kabelkanal 100 ergibt sich durch Verschwenken der in der gelenkpfannenartige Aufnahme 23 der Tragschiene 20 gelagerten Profilleiste 90 nach oben. Hierdurch erreicht auch das obere Ende der Profilleiste 90 die Tragschiene 20 und eine endseitig am oberen Ende der Profilleiste 90 vorgesehene Hakenleiste 91 kann eine an der Tragschiene20 angeformte Klemmleiste 28 hintergreifen, wodurch eine Klemmverbindung mit der Tragschiene 20 hergestellt wird und sich einen geschlossenen Kabelkanal 100 bildet. In dieser Befestigungsposition der Profilleiste 90 ist der Gelenkkopf 94 am unteren Ende der Profilleiste 90 innerhalb der gelenkpfannenartigen Aufnahme 23 an der Tragschiene 20 sicher gelagert. Dies wird dadurch erreicht, dass der Gelenkkopf 94, wie bereits beschrieben, zum einen größer als eine Halbkugel ist und andererseits die Abflachung 95 steiler ist als der Übergang 25 an der Tragschiene 20. Dieser als Abschrägung ausgebildete Übergang 25 stellt die Verbindung des oberen Abschlusses der gelenkpfannenartigen Aufnahme 23 zur Seitenwand 22 an der Tragschiene 20 her. Parallel zu diesem als Abschrägung ausgebildeten Übergang 25 verläuft der untere Bereich der Profilleiste 90, der in der Fig. 1 mit dem Bezugszeichen 93 bezeichnet wurde, d.h. dieser Bereich kann nicht weiter verschwenkt werden, da ansonsten diese Anschlagleiste 93 an dem Übergang 25 anschlägt. Die Ausrichtung des Übergangs 25 und der Anschlagleiste 93 steht in einem Winkel α zur Grundseite 26 der Tragschiene 20, wohingegen die Abflachung 95 am Gelenkkopf 94 der Profilleiste 90 in der Befestigungsposition, gezeigt in Fig. 1, in einem größeren Winkel β zur Grundseite 26 der Tragschiene 20 steht.

Für den Fall, dass weitere Kabel in den Kabelkanal 100 eingelegt, entfernt oder geprüft werden sollen, lässt sich die Klemmverbindung zwischen der Hakenleiste 91 und der Klemmleiste 28 lösen. Zur Vereinfachung dieses Demontagevorgangs ist im oberen Bereich der Profilliste 90 eine Griffleiste 92 angebracht. Diese kann mittels eines Werkzeugs hintergriffen werden, um so ausreichend Kraft zum Lösen der Klemmverbindung aufzubringen. Die Profilleiste 90 ist nach dem Lösen der Klemmverbindung nach unten verschwenkbar, insbesondere über die Montageposition, gezeigt in Fig. 2, hinaus, nämlich weiter nach unten in eine Halteposition. In dieser Halteposition wird die Profilleiste 90 selbstständig durch den Gelenkkopf 94 in der gelenkpfannenartigen Aufnahme 23 an der Tragschiene 20 gehalten. Dieses Verschwenken über die Montageposition hinaus nach unten wird dadurch möglich, dass die untere Abbiegung 27, die den unteren Abschluss der gelenkpfannenartigen Aufnahme bildet, gegenüber der Seitenwand 22 zurückversetzt ist und damit ein weiten Schwenkbereich für die Profilleiste 90 gewährleistet. Eine solche Halteposition als Öffnungsstellung hat den Vorteil, dass in einfacher Weise die Kabel und Leitungen verlegt werden können, ähnlich wie bei einem angeformten Kabelkanal des Standes der Technik. Andererseits ermöglicht die Profilleiste 90 und ihre Anordnung an der Tragschiene 20 die Bildung eines geschlossenen Kabelkanals 100, der Schutz vor mechanischen Beschädigungen der Kabel durch Tiere, herabfallende Teile sowie besseren Schutz gegen Witterungseinflüsse bietet.

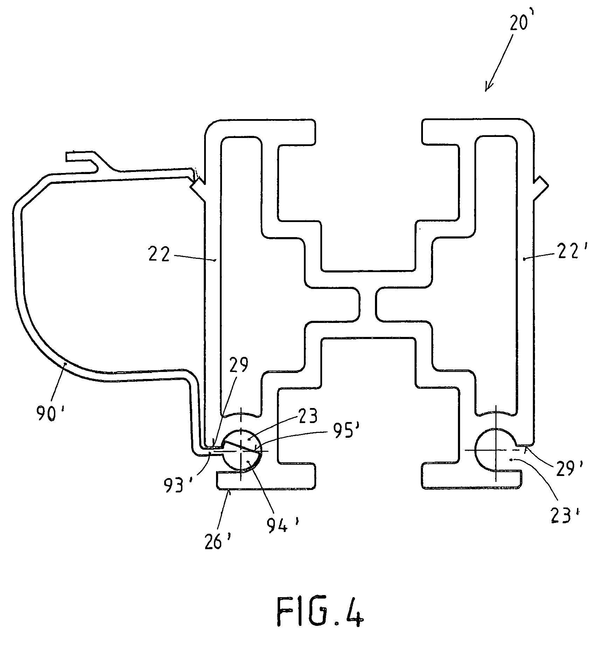

In der Fig. 4 ist eine weitere Ausführungsform einer Profilleiste 90' zur Bildung eines geschlossenen Kabelkanals an einer Tragschiene 20' gezeigt. Nachfolgend sollen nur die Unterschiede zur ersten Ausführungsform beschrieben werden. In diesem Beispiel ist an der Tragschiene 20' der Übergang 29, 29' von der Seitenwand 22, 22' zur gelenkpfannenartigen Aufnahme 23, 23' als waagerechte Abwinklung gestaltet. Die Profilleiste 90' ist an diese Ausgestaltung der Tragschiene 20' angepasst und besitzt eine Anschlagleiste 93', die in den Gelenkkopf 94' übergeht. Im Vergleich zur waagerechten Ausrichtung des Übergangs 29 und der waagerechten Ausrichtung der Anschlagleiste 93' im Befestigungsfall ist auch in diesem Beispiel die Abflachung 95' am Gelenkkopf 94' steiler zur Unterseite 26' ausgerichtet. Dies ermöglicht, in gleicher Weise wie beim ersten Ausführungsbeispiel, ein Verschwenken der Profilleiste 90' nach unten über die Montageposition hinaus in eine Halteposition.

### Bezugszeichenliste

- 10: Solarmodul

- 20, 20': Tragschiene
- 21,21': Nut
- 22, 22': Seitenwand
- 23, 23': Aufnahme, Gelenkpfanne
- 24, 24': Öffnung
- 25, 25': Übergang
- 26, 26': Unterseite
- 27, 27': Abbiegung
- 28, 28': Klemmleiste
- 29, 29': Übergang

- 30: Klemmprofil

- 40: Befestigungsschraube
- 41: Schraubenkopf
- 42: Schraubenschaft
- 43: Außengewinde

- 50: Schraubenmutter

- 60: Druckfeder

- 70: Dachhaken
- 71: Schraube
- 72: Schraubmutter
- 73: Unterlegscheibe

- 90, 90': Profilleiste
- 91: Hakenleiste
- 92: Griffleiste
- 93, 93': Anschlagleiste
- 94, 94': Gelenkkopf
- 95, 95': Abflachung

- 100: Kabelkanal

- B: Breite von 24
- Dmin: minimaler Durchmesser von 94
- Dmax: maximaler Durchmesser von 94
- M: Mittelachse

- α: Winkel von 95
- β: Winkel von 25

## Patentansprüche

1. Geschlossener Kabelkanal zur Aufnahme und Halterung von Leitungen oder Kabeln, die Solarmodule bzw. Photovoltaikmodule mit Anschlüssen verbinden,
gebildet durch die Seitenwand (22, 22') einer die Module (10) tragenden Tragschiene (20, 20') und durch eine Profilleiste (90, 90'), wobei die Profilleiste (90, 90') einerseits mit einem Ende schwenkbar an der Tragschiene (20, 20') gelagert sowie andererseits mit dem anderen Ende der Profilleiste (90, 90') an der Tragschiene (20, 20') festlegbar ist.

2. Kabelkanal nach Anspruch 1, **dadurch gekennzeichnet, dass** die Profilleiste (90, 90') C-förmig geformt ist und zwischen einer Befestigungsposition und einer Öffnungsposition verschwenkbar ist, wobei in der Befestigungsposition die Profilleiste (90, 90') mit der Tragschiene (20, 20') verbindbar ist und in der Öffnungsposition der Kabelkanal (100) zugänglich ist.

3. Kabelkanal nach Anspruch 1 oder 2, **dadurch gekennzeichnet, dass** beide Enden der Profilleiste (90, 90') lösbar mit der Tragschiene (20, 20') verbunden sind, wobei vorzugsweise die drehgelenkige Verbindung am unteren Ende vorgesehen ist und das obere Ende der Profilleiste (90, 90') über eine Klemmverbindung mit der Tragschiene (20, 20') verbunden ist.

4. Kabelkanal nach Anspruch 3, **dadurch gekennzeichnet, dass** die Profilleiste (90, 90') für die Klemmverbindung mit der Tragschiene (20, 20') an ihrem oberen freien Ende eine Hakenleiste (91) besitzt und an der Tragschiene (20, 20') eine Klemmleiste (28) angeformt ist.

5. Kabelkanal nach Anspruch 3, **dadurch gekennzeichnet, dass** die Profilleiste (90, 90') für die drehgelenkige Verbindung mit der Tragschiene (20, 20') an ihrem unteren freien Ende zu einem Gelenkkopf (94, 94') geformt ist und die Tragschiene (20, 20') mit einer gelenkpfannenartigen Aufnahme (23, 23') ausgestattet ist.

6. Kabelkanal nach Anspruch 5, **dadurch gekennzeichnet, dass** die gelenkpfannenartigen Aufnahme (23, 23') an der Tragschiene (20, 20') eine seitlich zugängliche Öffnung (24, 24') zum Einschub der Profilleiste (90, 90') besitzt, die sich bei einem Einschub in der Montageposition befindet.

7. Kabelkanal nach Anspruch 6, **dadurch gekennzeichnet, dass** die gelenkpfannenartigen Aufnahme (23, 23') an der Tragschiene (20, 20') nach unten durch eine Abbiegung (27, 27') gebildet wird, wobei die Abbiegung (27, 27') die Seitenwand (22, 22') der Tragschiene (20, 20') nicht überragt, vorzugsweise um 1 bis 5 mm gegenüber der Seitenwand (22, 22') zurückversetzt ist und der obere Abschluss der gelenkpfannenartigen Aufnahme (23, 23') in die Seitenwand (22, 22') übergeht.

8. Kabelkanal nach Anspruch 7, **dadurch gekennzeichnet, dass** die gelenkpfannenartigen Aufnahme (23, 23') an der Tragschiene (20, 20') nach oben durch einen Übergang (25, 25'; 29, 29') gebildet wird, wobei zum leichteren Einführen des Gelenkkopfs (94) der Profilleiste (90) der Übergang (25, 25') von der Seitenwand (22) zur gelenkpfannenartigen Aufnahme (23) als Abschrägung ausgebildet ist.

9. Kabelkanal nach Anspruch 8, **dadurch gekennzeichnet, dass** die Profilleiste (90, 90') im unteren Bereich zu einer Anschlagleiste (93, 93') geformt ist, welche unmittelbar in den Gelenkkopf (94, 94') übergeht, wobei bei geschlossenem Kabelkanal (100), die Anschlagleiste (93, 93') parallel zum Übergang (25, 25'; 29, 29') ausgerichtet ist.

10. Kabelkanal nach Anspruch 9, **dadurch gekennzeichnet, dass** der Gelenkkopf (94, 94') der Profilleiste (90, 90') zum seitlichen Einführen in die Öffnung (24, 24') der gelenkpfannenartigen Aufnahme (23, 23') eine Abflachung (95, 95') besitzt.

11. Kabelkanal nach Anspruch 10, **dadurch gekennzeichnet, dass** bei geschlossenem Kabelkanal (100) die Abflachung (95, 95') des Gelenkkopfs (94, 94') in einem Winkel (β) zur geraden Unterseite (26, 26') der Tragschiene (20, 20') ausgerichtet ist und die Anschlagleiste (93, 93') sowie der Übergang (25, 25', 29, 29') in einem Winkel (α,) zur Unterseite (26, 26') ausgerichtet sind, wobei der Winkel (β) größer als der Winkel (α,) ist.

12. Kabelkanal nach einem der Ansprüche 6 bis 11, **dadurch gekennzeichnet, dass** die Profilleiste (90, 90') aus der Montageposition nach oben in die Befestigungsposition und nach unten in eine besondere Öffnungsposition verschwenkbar ist, nämlich in eine Halteposition für die Profilleiste (90, 90').

13. Kabelkanal nach einem der Ansprüche 3 bis 12, **dadurch gekennzeichnet, dass** zum leichten Öffnen des Kabelkanals (100), nämlich zum leichten Lösen der Klemmverbindung, an der Außenseite der Profileiste (90, 90') benachbart zur Klemmverbindung eine Griffleiste (92) vorgesehen ist.

14. Kabelkanal nach einem der Ansprüche 1 bis 13, **dadurch gekennzeichnet, dass** die Tragschiene (20, 20') und die Profilleiste (90, 90') Strangpressprofile aus Metall oder Kunststoff sind, vorzugsweise aus Aluminium.

15. Kabelkanal nach einem der Ansprüche 1 bis 13, **dadurch gekennzeichnet, dass** die Tragschiene (20, 20') spiegelsymmetrisch zur Mittelachse (M) ausgestaltet ist, so dass die Profilleiste (90, 90') an beiden Seitenwänden (22, 22') der Tragschiene (20, 20') angeordnet werden kann.
